# EUROPEAN PATENT SPECIFICATION

(11) **EP 0 565 876 B1**
(45) Date of publication and mention of the grant of the patent: **02.05.1997**
(21) Application number: 93104160.2
(22) Date of filing: 15.03.1993
(51) Int. Cl.: B01J 49/00, C02F 1/42

(54) **A method of regenerating water softeners and a water softener**
Méthode zum Regenerieren von Wasserenthärtern und Wasserenthärter
Méthode pour régénérer des adoucisseurs d'eau et adoucisseur d'eau

(30) Priority: 18.03.1992 IT TO920235
(43) Date of publication of application: 20.10.1993
(73) Proprietor: BITRON S.p.A., 10064 Pinerolo (Torino) (IT)
(72) Inventor: Brignone, Enzo, I-12025 Dronero (Cuneo) (IT)
(74) Representative: Gerbino, Angelo

(56) References cited:
- DE-A- 3 440 964
- DE-A- 3 710 511
- US-A- 2 832 373
- US-A- 4 238 325

## Description

The present invention relates to a method of regenerating water softeners for treating the water used by a domestic electric appliance having the features indicated in the preamble of claim 1.

A method of this kind is disclosed in US-A-4 238 325.

The present invention further relates to a water softener for carrying out the regenerating method, including:
- a container for holding a substance having decalcifying properties, the container having at least one lower inlet and at least one upper outlet for the water which has to flow through the substance so as to be softened before use,
- a reservoir for holding a saline substance, the reservoir having at least one inlet and one outlet through which water is made to flow so as to dissolve the saline substance and form a brine suitable for regenerating the decalcifying substance,
- a duct for connecting the outlet of the reservoir to the container, the connecting duct having a valve, and
- a duct for draining the brine from the container, the drain duct having a valve.

The object of the present invention is to provide a method and a water softener of the type indicated above for regenerating the substance with decalcifying properties, by virtue of which it is possible to use a smaller quantity of salt so that the impact of the discharges on the environment is slight.

This object is achieved by a method of the type indicated above, further comprising the features indicated in the characterising portion of claim 1.

A further subject of the present invention is a water softener of the type indicated above, characterised in that the connecting duct opens into the container at a height such as to define a lower portion in which the substance with decalcifying properties is disposed, and an upper portion which does not contain the decalcifying substance and can hold water which has previously flowed through the decalcifying substance, and in that the container is positioned higher than the reservoir, with the drain duct extending from the lower portion of the container so that the liquid therein can drain out under gravity.

When the device according to the invention is in operation, the water to be softened flows through the container from the bottom upwards and the brine formed in the reservoir is then made to flow through the container in the opposite direction, from the top downwards, in order to regenerate the decalcifying substance which is usually an ion-exchange resin.

At the same time as the brine is admitted, some of the decalcified water which previously flowed through the exchange resin and is still confined in the upper portion of the container starts to flow through the ion-exchange resin, also from the top downwards, and dilutes the brine slightly.

When the brine ceases to be admitted, the remaining decalcified water still confined in the upper portion of the container continues to flow downwards without interruption.

This quantity of water thus has a rinsing effect, removing from the exchange resin the salt and any calcareous residues left adhering thereto at the regeneration stage.

The rates at which the brine and the rinsing water pass through the exchange resin may conveniently be slowed by the suitable adjustment of the size of the opening of the valve in the discharge duct or of a choking device thereof, so as to achieve as complete as possible an exchange of ions between the brine and the exchange resin and a subsequent thorough rinsing thereof.

The slowed flow of the brine and the rinsing water and the fact that both these flows have the same flow-rate and take place in the opposite direction to that of the water to be decalcified, enable optimal use to be made of the brine and prevent wastage of salt and rinsing water.

In a preferred embodiment of the device according to the invention, the drain duct for the brine opens into a suitable receiving compartment.

The cycle for regenerating and rinsing the exchange resin can thus be carried out simultaneously with the normal working cycle of the domestic electric appliance, reducing its overall operating time in comparison with a situation in which the draining of the brine takes place into a receiving compartment also intended for other uses and cannot therefore be carried out simultaneously therewith.

A further subject of the present invention is a domestic electric appliance including a water softener of the type indicated above and/or operating according to the method mentioned above.

Further advantages and characteristics of the present invention will become clear from the detailed description which follows with reference to the appended drawings provided by way of non-limiting example, in which:

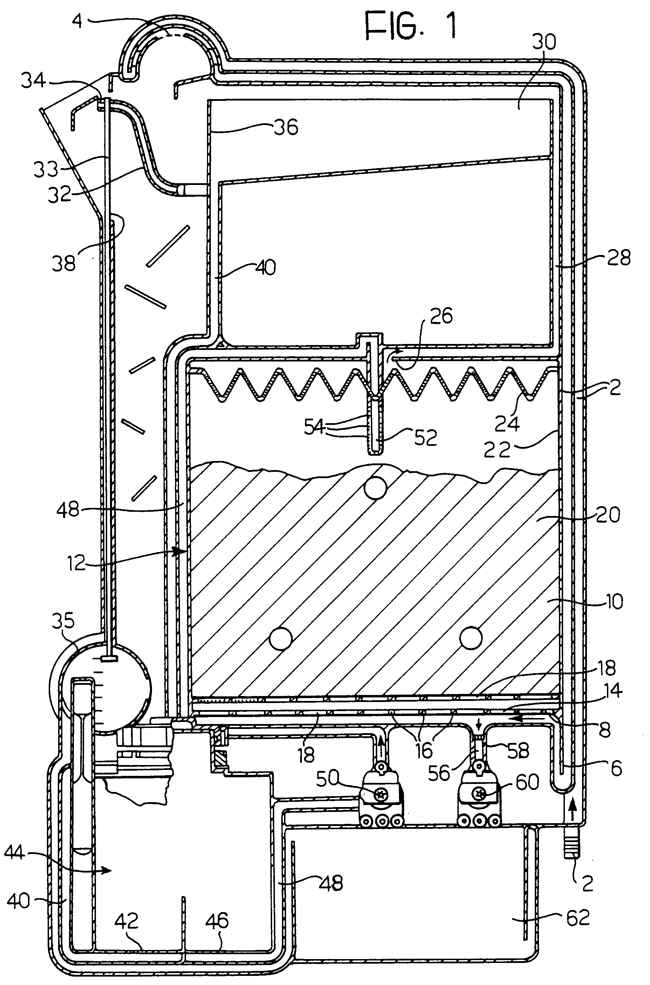

Figure 1 is a sectioned front elevational view of a water softener according to the invention, and

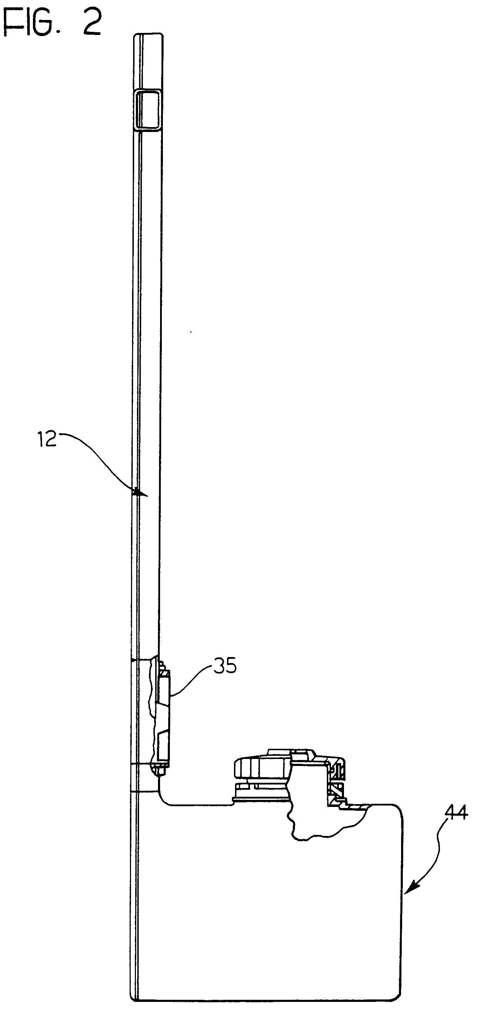

Figure 2 is a side elevational view of the water softener.

A water softener for treating the water used, for example, by a diswasher, includes a water-supply duct 2 with a portion 4 which acts as an air break device.

The duct 2, which also has a siphon-shaped portion 6, opens through an opening 8 into the lower portion 10 of a container 12 in which there is a diffuser element 14 having a plurality of through holes 16 side by side in order to make the water-flow homogeneous. Above the diffuser element 14 and a filter 18 in the container 12 is a substance with decalcifying properties, for example, an ion-exchange resin 20. The upper portion 22 of the container 12 does not contain any resin 20 and has a filter 24 which, in section, has a series of V-shaped corrugations.

A duct 28 extends from an upper opening 26 in the container 12 and opens into a chamber 30 having means for regulating the level of the water therein, comprising a flexible outlet tube 32, the height of the free end 34 of which can be varied by means of a control rod 33 operable through the ventilation hole 35.

An overflow wall 36, over which the water in the chamber 30 can overflow, separates the chamber 30 from a duct 38 which opens into the washing tank of the dishwasher, not shown in the drawings.

A duct 40 also extends from the chamber 30 and opens through a plurality of slots 42 into a reservoir 44 disposed below the container 12 for holding a saline substance, for example, sodium chloride, for regenerating the exchange resin 20, as will be explained in greater detail below.

Further slots 46 put the reservoir 44 into communication with a connecting duct 48 which has an on-off valve 50 and an outlet end 52 with outlet slots 54. The duct 48 opens into the container 12 above the lower portion 10 which contains the exchange resin 20 and below the filter 24.

A drain duct 56 extending from the lower portion 10 of the container 12 has a filter 58 and an on-off valve 60 and opens into a receiving compartment 62 which is separate from the washing tank of the dishwasher.

The following is an example of the method of operation of the device described above.

The water required for the machine to operate flows through the supply duct 2, enters the lower portion 10 of the container 12 through the opening 8, and is diffused by the holes 16 in the diffuser element 14 through the exchange resin 20 which is in the lower portion 10 of the container 12. The decalcified water then passes through the filter 24, leaves the container 12 through the upper opening 26 and flows through the duct 28 into the chamber 30 where it reaches a certain level predetermined by the positioning of the free end 34 of the flexible tube 32. Water in excess of the quantity necessary to fill the chamber 30 to the desired level flows out through the tube 32 or overflows over the wall 36 into the duct 38 and thence into the tank of the dishwasher where it is used for the washing operations.

The already-decalcified water in the chamber 30 flows through the duct 40 into the reservoir 44 where it dissolves the saline substance therein and forms a regenerating brine which, once the on-off valve 50 has been opened, is admitted through the connecting duct 48 into the container 12, above the exchange resin 20. The brine can thus flow through the resin 20 from the top downwards, regnerating it by virtue of the exchange which takes place between the ions contained in the resin 20 and in the brine.

The used brine is drained continuously into the receiving compartment 62 through the duct 56, the on-off valve 60 of which is opened at the same time as the valve 50 in the duct 48.

The brine is diluted slightly by the decalcified water which remains in the upper portion 22 of the container 12 and which runs down through the exchange resin 20 together with the brine. When the brine ceases to be admitted, the remaining quantity of decalcified water which is still confined in the upper portion 22 of the container 12 continues to flow down, removing the salt and calcareous particles deposited on the resin 20 during the regeneration.

The regeneration and rinsing of the resin 20 thus take place continuously and with equal and slow flow-rates of brine and rinsing water. This achieves a reduced consumption of water and salt together with very effective regeneration and washing operations.

Naturally, the principle of the invention remaining the same, the details of construction and forms of embodiment may be varied widely with respect to those described and illustrated purely by way of example, without thereby departing from the scope thereof. For example, since the working cycles of the on-off valves 50 and 60 in the connecting and drain ducts 48 and 56 are the same, if the water softener is made to operate in a manner such as that described above, a single control device may be used for both with a consequent reduction in the number of components used in the water softener.

Alternatively, the on-off valve 50 may be replaced by a one-way valve which allows a flow through the duct 48 only in the direction from the tank 44 to the container 12. The opening of the on-off valve 60 in the duct 56 thus automatically causes a flow in the duct 48 and its closure causes the flow in the duct 48 to stop.

## Claims

1. A method of regenerating water softeners for treating the water used by a domestic electric appliance, which method, after a step in which the water to be softened flows through a container (12) for holding a substance (20) having decalcifying properties, provides for a step in which a regenerating brine flows through the container (12) for holding the substance (20) with decalcifying properties in the opposite direction to that followed by the water to be softened, and then for a step in which water for rinsing off the residues of brine flows through the container (12) for holding the substance (20) with decalcifying properties in the same direction as the regenerating brine, the rinsing water being decalcified and having the same flow-rate as the brine,
said method being characterised in that some of the decalcified water, which previously flowed through the substance (20) having decalcifying properties and which was confined in the upper portion of the container (12), is used as water for rinsing off the residues of brine.

2. A method according to Claim 1, characterised in that the steps involving the flow of the regenerating brine and the rinsing water take place without interruption.

3. A method according to any one of the preceding claims, characterised in that the water to be softened flows from the bottom upwards and the regenerating brine and rinsing water flow from the top downwards.

4. A water softener, particularly for treating the water used by a domestic electric appliance including:
- a container (12) for holding a substance (20) having decalcifying properties, the container having at least one inlet (8) and one outlet (26) for the water which has to flow through the substance (20) so as to be softened before use,
- a reservoir (44) for holding saline substance, the reservoir having at least one inlet (42) and one outlet (46) through which the water is made to flow so as to dissolve the saline substance and form a brine suitable for regenerating the decalcifying substance (20),
- a duct (48) for connecting the outlet (46) of the reservoir (44) to the container (12), the connecting duct (48) having a valve (50), and
- a duct (56) for draining the brine from the container (12), the drain duct (56) having a valve (60),
the water softener being characterised in that the connecting duct (48) opens into the container (12) at a height such as to define a lower portion (10), in which the substance (20) with decalcifying properties is disposed, and an upper portion (22) which does not contain the decalcifying substance (20) and can hold water which has previously flowed through the decalcifying substance (20), and in that the container (12) is positioned higher than the reservoir (44) with the drain duct (56) extending from the lower portion (10) of the container (12) so that the liquid therein can drain out under gravity.

5. A water softener according to Claim 4, characterised in that the drain duct (56) opens into a particular receiving compartment (62).

6. A water softener according to any one of the preceding Claims 4 and 5, characterised in that the valve (50) in the connecting duct (48) is an on-off valve or a one-way valve.

7. A water softener according to any one of the preceding Claims 4 to 6, characterised in that the connecting duct (48) opens into the container (12) below a filter (24).

8. A water softener according to Claim 7, characterised in that the filter (24) has a series of V-shaped corrugations in section.

9. A water softener according to any one of the preceding Claims 4 to 8, characterised in that a filter (58) is positioned in the drain duct (56), upstream of the on-off valve (60).

10. A water softener according to any one of the preceding Claims 4 to 9, characterised in that it includes a chamber (30) for receiving the water to be sent to the reservoir (44) to form the regenerating brine, the chamber being disposed hydraulically downstream of the decalcified water which has flowed through the container (12).

11. A water softener according to Claim 10, characterised in that the chamber (30) has means for regulating the water level therein, comprising a flexible outlet tube (32) and a rod (33) for controlling the height of the free end (34) of the tube (32).

12. A water softener according to any one of the preceding Claims 4 to 11, characterised in that a supply duct (2) which opens into the inlet (8) of the container (12) has a siphon-shaped portion (6).

13. A water softener according to any one of the preceding Claims 4 to 12, characterised in that a diffuser element (14) is positioned in the container (12), below the substance (20) with decalcifying properties and has a plurality of through holes (16) for enabling a homogeneous flow of water to take place through the substance (20) with decalcifying properties.

14. A domestic electric appliance including a water softener according to any one of the preceding Claims 4 to 13 and/or operating according to the method of any one of the preceding Claims 1 to 3.

## Patentansprüche

1. Verfahren zum Regenerieren von Wasserenthärtern zur Behandlung des in einem elektrischen Haushaltsgerät verwendeten Wassers, wobei dieses Verfahren nach einem Schritt, in welchem das zu enthärtende Wasser durch einen Behälter (12) für die Bereitstellung eines Mittels (20) mit entkalkenden Eigenschaften fließt, einen Schritt vorsieht, bei dem eine regenerierende Sole durch den Behälter (12) für die Bereitstellung des Mittels (20) mit entkalkenden Eigenschaften in die entgegengesetzte Richtung zur Fließrichtung des zu enthärtenden Wassers fließt, und einen darauffolgenden Schritt vorsieht, bei dem Wasser zum Wegspülen der Solereste durch den Behälter (12) für die Bereitstellung des Mittels (20) mit entkalkenden Eigenschaften in der gleichen Richtung fließt wie die regenerierende Sole, wobei das Wasser entkalkt ist und die gleiche Fließrate hat wie die Sole, und wobei dieses Verfahren dadurch gekennzeichnet ist, daß ein Teil des entkalkten Wassers, welches vorher durch das Mittel (20) mit entkalkenden Eigenschaften geflossen und in einem oberen Bereich des Behälters (12) eingeschlossen ist, als Wasser zum Ausspülen der Solereste verwendet wird.

2. Verfahren nach Anspruch 1, dadurch gekennzeichnet, daß die Schritte umfassend das Fließen der regenerierenden Sole und des Spülwassers ohne Unterbrechung ablaufen,

3. Verfahren nach einem der vorhergehenden Ansprüche, dadurch gekennzeichnet, daß das zu enthärtende Wasser von unten nach oben und die regenerierende Sole und das Spülwasser von oben nach unten fließen.

4. Wasserenthärter, insbesondere zur Behandlung des in einem elektrischen Haushaltsgerät verwendeten Wassers, umlassend:
- einen Behälter (12) für die Bereitstellung eines Mittels (20) mit entkalkenden Eigenschaften, wobei der Behälter mindestens einen Einlaß (8) und einen Auslaß (26) für das Wasser hat, welches durch das Mittel (20) fließen muß, um vor der Verwendung enthärtet zu werden,
- einen Vorratsbehälter (44) zur Bereitstellung eines salzhaltigen Mittels, wobei der Vorratsbehälter mindestens einen Einlaß (42) und einen Auslaß (46) hat, durch welche das Wasser geführt wird, um das salzhaltige Mittel zu lösen und eine Sole zu bilden, die zum Regenieren des Entkalkungsmittels (20) geeignet ist,
- eine Leitung (48) für die Verbindung des Auslasses (46) des Vorratsbehälters (44) mit dem Behälter (12), wobei die Verbindungsleitung (48) ein Ventil (50) hat, und
- eine Leitung (56) zum Ableiten dar Sole aus dem Behälter (12), wobei die Ablaufleitung (56) ein Ventil (60) hat,
wobei dar Wasserenthärter dadurch gekennzeichnet ist, daß das Verbindungsrohr (48) im Behälter (12) in einer Höhe mündet, die einen unteren Bereich (10), in dem sich das Mittel (20) mit entkalkenden Eigenschaften befindet, begrenzt, wobei im oberen Bereich (22), welcher des entkalkende Mittel (20) nicht enthält, Wasser enthalten ist, welches vorher durch das entkalkende Mittel (20) geflossen ist, und daß dar Behälter (12) höher als der Vorratsbehältar (44) angeordnet ist, wobei sich die Ablaufleitung (56) vom unteren Bereich (10) des Behälters (12) weg erstreckt, sodaß das sich darin befindende Wasser unter Schwerkraft ablaufen kann.

5. Wasserenthärter nach Anspruch 4, dadurch gekennzeichnet, daß die Ablaufleitung (56) in eine spezielle Aufnahmekammer (62) mündet.

6. Wasserenthärter nach einem der vorhergehenden Ansprüche 4 und 5, dadurch gekennzeichnet, daß das Ventil (50) in der Verbindungsleitung (48) ein Absperrventil oder ein Einwegventil ist.

7. Wasserenthärter nach einem der vorhergehenden Ansprüche 4 bis 6, dadurch gekennzeichnet, daß die Verbindungsleitung (48) in den Behälter (12) unter einem Filter (24) mündet.

8. Wasserenthärter nach Anspruch 7, dadurch gekennzeichnet, daß der Filter (24) eine Reihe von im Schnitt V-förmigen Wellen hat.

9. Wasserenthärter nach einem der vorhergehenden Ansprüche 4 bis 8, dadurch gekennzeichnet, daß ein Filter (58) in der Ablaufleitung (56) stromaufwärts vom Schaltventil (60) angeordnet ist.

10. Wasserenthärter nach einem der vorhergehenden Ansprüche 4 bis 9, dadurch gekennzeichnet, daß er eine Kammer (30) für die Aufnahme des zum Vorratsbehälter (44) zur Bildung der regenerterenden Sole geführten Wasser umfaßt, wobei die Kammer strömungsbezogen nach dem entkalkten Wasser angeordnet ist, welches durch den Behälter (12) geflossen ist.

11. Wasserenthärter nach Anspruch 10, dadurch gekennzeichnet, daß die Kammer (30) Mittel zum Einstellen des darin herrschenden Wasserstandes hat, umfassend ein biegsames Auslaßrohr (32) und eine Stange (33) zum Verstellen der Höhe des freien Endes (34) des Rohres (32).

12. Wasserenthärter nach einem der vorhergehenden Ansprüche 4 bis 11, dadurch gekennzeichnet, daß eine Zuflußleitung (2), welche in den Einlaß (8) des Behälters (12) mündet, einen siphonförmigen Abschnitt (6) aufweist.

13. Wasserenthärter nach einem der vorhergehenden Ansprüche 4 bis 12, dadurch gekennzeichnet, daß ein Diffusorelement (14) im Behälter (12) unter dem Mittel (20) mit entkalkenden Eigenschaften angeordnet ist und eine Mehrzahl von Durchgangsöffnungen (16) aufweist, die ein homogenes Fließen von Wasser durch das Mittel (20) mit entkalkenden Eigenschaften ermöglichen.

14. Elektrisches Haushaltsgerät umfassend einen Wasserenthärter nach einem der vorhergehenden Ansprüche 4 bis 13 und/oder arbeitend gemäß dem Verfahren nach einem der vorhergehenden Ansprüche 1 bis 3.

## Revendications

1. Méthode pour régénérer des adoucisseurs d'eau pour traiter l'eau utilisée par un appareil ménager électrique, laquelle méthode, après une étape pendant laquelle l'eau à adoucir coule à travers un récipient (12) contenant une substance (20) ayant des propriétés décalcifiantes, prévoit une étape à laquelle une saumure régénérante coule à travers le récipient (12) contenant la substance (20) ayant des propriétés décalcifiantes dans la direction opposée à celle suivie par l'eau à adoucir, et ensuite une étape à laquelle de l'eau pour rincer les résidus de saumure coule à travers le récipient (12) contenant la substance (20) ayant des propriétés décalcifiantes dans la même direction que la saumure régénérante, l'eau de rinçage étant décalcifiée et ayant la même vitesse d'écoulement que la saumure,
ladite méthode étant caractérisée en ce qu'une partie de l'eau décalcifiée, qui a précédemment coulé à travers la substance (20) ayant des propriétés décalcifiantes et qui a été confinée à la partie supérieure du récipient (12), est utilisée comme eau de rinçage des résidus de saumure.

2. Méthode selon la revendication 1, caractérisée en ce que les étapes impliquant l'écoulement de la saumure régénérante et de l'eau de rinçage ont lieu sans interruption.

3. Méthode selon l'une quelconque des revendications précédentes, caractérisée en ce que l'eau à adoucir coule depuis le bas vers le haut, et la saumure régénérante et l'eau de rinçage coulent depuis le haut vers le bas.

4. Adoucisseur d'eau, particulièrement pour traiter l'eau utilisée par un appareil ménager électrique, incluant:
- un récipient (12) contenant une substance (20) ayant des propriétés décalcifiantes, le récipient ayant au moins une arrivée (8) et une sortie (26) pour l'eau qui doit couler à travers la substance (20) de façon à être adoucie avant utilisation,
- un réservoir (44) contenant une substance saline, le réservoir ayant au moins une arrivée (42) et une sortie (46) à travers lesquelles l'eau est amenée à couler de façon à dissoudre la substance saline et former une saumure convenant à la régénération de la substance décalcifiante (20),
- un conduit (48) pour relier la sortie (46) du réservoir (44) au récipient (12), le conduit de raccordement (48) ayant une vanne (50), et
- un conduit (56) pour drainer la saumure du récipient (12), le conduit d'évacuation (56) ayant une vanne (60),
l'adoucisseur d'eau étant caractérisé en ce que le conduit de raccordement (48) donne sur le récipient (12) à une hauteur de façon à définir une partie inférieure (10), dans laquelle la substance (20) ayant des propriétés décalcifiantes est disposée, et une partie supérieure (22) qui ne contient pas de substance décalcifiante (20) et peut contenir de l'eau qui a précédemment coulé à travers la substance décalcifiante (20), et en ce que le récipient (12) est positionné plus haut que le réservoir (44), le conduit d'évacuation (56) s'étendent depuis la partie inférieure (10) du récipient (12), de sorte que le liquide dans celui-ci puisse s'évacuer sous l'effet de la gravité.

5. Adoucisseur d'eau selon la revendication 4, caractérisé en ce que le conduit d'évacuation (56) donne sur un compartiment de réception particulier (62).

6. Adoucisseur d'eau selon l'une quelconque des revendications précédentes 4 et 5, caractérisé en ce que la vanne (50) dans le conduit de raccordement (48) est une vanne à deux voies ou une vanne unidirectionnelle.

7. Adoucisseur d'eau selon l'une quelconque des revendications précédentes 4 à 6, caractérisé en ce que le conduit de raccordement (48) donne sur le récipient (12) sous un filtre (24).

8. Adoucisseur d'eau selon la revendication 7, caractérisé en ce que le filtre (24) présente une série de cannelures avec une section en forme de V.

9. Adoucisseur d'eau selon l'une quelconque des revendications précédentes 4 à 8, caractérisé en ce qu'un filtre (58) est positionné dans le conduit d'évacuation (56), en amont de la vanne à deux voies (60).

10. Adoucisseur d'eau selon l'une quelconque des revendications précédentes 4 à 9, caractérisé en ce qu'il inclut une chambre (30) pour recevoir l'eau à envoyer au réservoir (44) pour former la saumure régénérante, la chambre étant disposée de façon hydraulique en aval de l'eau décalcifiée qui a coulé à travers le récipient (12).

11. Adoucisseur d'eau selon la revendication 10, caractérisé en ce que la chambre (30) dispose de moyens pour réguler le niveau d'eau dans celle-ci, comprenant un tuyau de sortie flexible (32) et une tige (33) pour contrôler la hauteur de l'extrémité libre (34) du tuyau (32).

12. Adoucisseur d'eau selon l'une quelconque des revendications précédentes 4 à 11, caractérisé en ce qu'un conduit d'alimentation (2) qui donne sur l'arrivée (8) du récipient (12) a une partie en forme de siphon (6).

13. Adoucisseur d'eau selon l'une quelconque des revendications précédentes 4 à 12, caractérisé en ce qu'un élément de diffusion (14) est positionné dans le réservoir (12), sous la substance (20) ayant des propriétés décalcifiantes et présente une pluralité de trous traversants (16) pour permettre un écoulement homogène de l'eau à travers la substance (20) ayant des propriétés décalcifiantes.

14. Appareil ménager électrique incluant un adoucisseur d'eau selon l'une quelconque des revendications précédentes 4 à 13 et/ou fonctionnant selon la méthode de l'une quelconque des revendications précédentes 1 à 3.
